# EUROPEAN PATENT SPECIFICATION

(11) **EP 2 852 287 B1**
(45) Date of publication and mention of the grant of the patent: **02.10.2019**
(21) Application number: 13793471.7
(22) Date of filing: 23.05.2013
(51) Int. Cl.: A23J 1/12, A23J 3/18, A23L 33/17, C08B 30/04

(54) **PROCESS FOR THE ENRICHMENT OF GLUTEN AND STARCH FRACTIONS IN WHEAT FLOUR**
VERFAHREN ZUR ANREICHERUNG VON GLUTEN- UND STÄRKEFRAKTIONEN IN WEIZENMEHL
PROCÉDÉ D'ENRICHISSEMENT DE FRACTIONS DE GLUTEN ET D'AMIDON D'UNE FARINE DE BLÉ

(30) Priority: 23.05.2012 EP 12169020
(43) Date of publication of application: 01.04.2015
(73) Proprietor: Cargill, Incorporated, Wayzata, MN 55391 (US)
(72) Inventor: KOOT, Norbertus Philippus, 3824 JA Amersfort (NL); VAN DER ZALM, Elizabeth Egberdina Johanna, 4793 RT Fijnaart (NL); VAN DEN ABEELE, Theo, 4612 PS Bergen op Zoom (NL)
(74) Representative: Jantschy, Jasmin
(86) International application number: PCT/US2013/042437
(87) International publication number: WO 2013/177405

(56) References cited:
- EP-A1- 0 010 447
- EP-A1- 0 010 447
- US-A- 3 868 355
- US-A- 5 851 301
- US-A1- 2009 202 689
- US-A1- 2009 202 689
- E.E.J. VANDERZALM, J.A.M. BERGHOUT, A.J. VAN DER GOOT, R.M. BOOM: "Starch-gluten separation by shearing: Influence of the device geometry", CHEMICAL ENGINEERING SCIENCE , no. 73 14 February 2012 (2012-02-14), pages 421-430, XP002686315, DOI: 10.1016/j.ces.2012.02.009 Retrieved from the Internet: URL:http://www.sciencedirect.com/science/a rticle/pii/S0009250912000954 [retrieved on 2012-10-30]

## Description

### CROSS REFERENCE TO RELATED APPLICATION

This application claims the benefit of the European Provisional Patent Application, Serial No. 12169020.0, filed May 23, 2012, PROCESS FOR PROTEIN AGGREGATION IN WHEAT FLOUR DOUGH.

### Field of the Invention

The subject invention relates to a method and an arrangement for the enrichment of gluten enriched fractions and starch enriched fractions in wheat flour, and eventual separation of gluten and starch fractions from wheat flour. The present invention also relates to a process for making a dough comprising one or more gluten enriched fractions and gluten obtained therefrom, and one or more starch-enriched fractions.

Separation of wheat flour into gluten and starch is an industrial scale process usually requiring large amounts of high quality water.

The gluten proteins have diverse applications, e.g. as texturising or adherence agents, as wheat flour improvers in the bakery industry. Starch produced is processed into sugar syrups or used in industrial applications in general and the food industry in particular.

Industrial wheat flour separation processes usually rely on the difference in solubility in water, since starch tends to have a higher dispersability in water than the gluten proteins. An example of such a process is the so called 'Martin' process. In this process, a dough is formed from wheat flour and water, and the starch is subsequently extracted from the dough by consecutive washing steps. A further example of a process involving a wet separation step is disclosed in EP-A-090533. In this process, gluten aggregates are formed during a dough preparation, the dough is then washed while gently kneading, separating the dissolved starch from the slurry by a washing or centrifugation step with decanters or hydro cyclones. The non-soluble gluten is recovered from the slurry by sieving followed by drying over a ring dryer. In case of flash drying, higher temperatures up to even 300°C can be applied. The drying step is considered as very critical, since gluten can easily be damaged by severe heating and lose its functionality. Typically, gluten resulting from these processes have a protein content of 75 to 80 %, based on dry matter.

A disadvantage of the above separation processes is that copious amounts of high quality water are used that need to be purified afterwards. Secondly, much energy is needed to remove the water from the products; and thirdly, the gluten will always suffer from a certain amount of heat damage.

EP-A-1881996 discloses a process for the separation of gluten and starch from wheat flour, said process comprises the steps of: (a) mixing a flour and an aqueous composition to obtain a dough having a moisture content of less than 50 wt% based on dry weight of the flour; (b) subjecting the dough obtained in step (a) to an essentially simple shear flow with a shear stress of at least 1 kPa and a specific mechanical energy input of at least 5 kJ/kg per minute processing time to obtain a processed dough; and (c) separating the processed dough into a gluten enriched fraction and a starch enriched fraction.

While this process permits to reduce the amount of water and energy for its removal needed, the essentially simple shear flow makes it difficult to operate the process on a continuous basis, and in an industrial scale.

EP-00-10447-A1 discloses a method of separating wheat gluten and starch from wheat flour by mixing the flour with from 0.6 to 1.0 part water per part flour, maturing the mixture to form a dough and to hydrate the gluten, diluting the dough with a further 0.5 to 3 parts water, and either simultaneously or subsequently applying shear to the dough, e.g. by agitation or extrusion, whereby the gluten coagulates and thereafter separating the starch and gluten.

US-2009-202689-A1 discloses a process for the separation of gluten and starch from wheat flour, wherein in a first step the wheat flour is converted into a dough having a moisture content of less than 50 wt %, based on dry weight of the flour.

Hence, there is a great need for a technology that facilitates the separation while the aforementioned negative effects are significantly decreased or eliminated, specifically reducing the amount of solvent employed. More specifically, there remains a need for a process that allows continuous processing on an industrial scale.

The process according to the present invention, is defined in the appended claims, and allows operating a (semi-)continuous process for the separation of gluten and starch from wheat flour, while permitting to reduce the amount of water employed and therefore reduce the energy required to remove the water, and the heat damage and microbial degradation on the gluten protein obtained.

Accordingly, in a first aspect, the present invention relates to a process for the continuous or semi-continuous separation of gluten and starch from wheat flour, comprising the steps of: (a) contacting wheat flour with a diluent to obtain a first dough; (b) subjecting the first dough under a first pressure to a deformation comprising simple shear flow, rotational flow and elongational flow, to obtain a second dough comprising starch and aggregated gluten strands; and (c) subjecting the second dough to a deformation comprising a shear flow at a second pressure different from the first pressure, to obtain a composition comprising one or more aggregated gluten enriched fractions and one or more starch enriched fractions. The composition obtained in step (c) may also be referred to as the third dough herein.

The diluent employed in the subject process preferably is an aqueous composition, more preferably comprising a diluted salt solution. The one or more salts are preferably chosen from salts that are fit for human or animal consumption, more preferably alkali or earth alkali metal salts, most preferably comprising sodium chloride. More preferably, the solution comprises of from 0 to 8 % weight/weight (wt./wt.) of one or more of the above salts, preferably comprising sodium chloride, more preferably of from 0.01 to 6 % (wt./wt.), yet more preferably of from 1 to 5% (wt./wt.), again more preferably of from 2 to 4 % (wt./wt.) of sodium chloride. The diluent may further comprise other components, such as additives, co-solvents, preservatives, viscosity modifiers and/or enzymes. Typical enzymes include amylases, xylanases, proteases, cellulases and/or arabinofuranosidases. Preferred are enzymes that enhance the separation between starch and gluten, as for instance those disclosed in WO0200911, and/or generally those that allow a better agglomeration of the gluten.

The term "dough" as used herein typically refers to a non-yeast comprising dough, i.e. a non-fermented dough prepared from wheat flour and the diluent preferably comprises water and optional ingredients such as salt and/or additives, including enzymes.

The term "simple shear" is well known in the art and implies that material planes slide over each other in only one direction (cf. CW. Macosko, "Rheology, Principles, Measurements and Applications", VCH Publishers, Inc., New York (1994), in particular pages 27 - 29, 40 and 70 - 75). In either step (b) and/or (c), all shear components may be present, and can be chosen by a skilled operator according to the equipment employed, and the results obtained. Preferably, though, in step (c), the largest component of the shear flow exerted onto the dough is contributed by the simple shear flow component.

Wheat flour varies in composition and particle size and distribution, depending on the origin of the wheat, and the milling processes applied. The present process may use hard or soft wheat. The method may be applied to any kind of wheat. The term "wheat" herein includes any wheat variety and related grain species, in so far as they comprise starch and viscoelastic gluten in a suitable amount to perform the process.

The term "Gluten" refers to a protein mixture present in wheat. Within gluten, there are four main proteins, the so called albumins, glutelins such as glutenin, globulins, and prolamins such as gliadin. Gliadin and glutenin typically form the majority of the protein present in wheat gluten, and together form the gluten complex through crosslinking through disulfide bonds between cysteine residues. The concentration of gluten herein refers to the amount of protein measured in the gluten enriched fraction, based on a determination of the nitrogen content, and multiplying by a conversion factor of 5.7 to calculate the measured protein content from the nitrogen content.

A suitable method for measuring this content is e.g. provided by using the Leco CN-2000 apparatus, which is commercially available from the LECO Corporation, Saint Joseph, Michigan, USA.The term "gluten particles" refers to three-dimensional agglomaterates of gluten formed during steps (b) and (c), which may be spherical, roll-like strands, or sheets of gluten proteins.

By applying the process of the present invention it is possible to obtain a gluten-enriched fraction wherein the content of gluten is at least 50% protein w/w on dry matter, more preferably 60%, yet more preferably more than 70%, yet more preferably more than 80% and most preferably 85%.

The present process permits to obtain gluten having a higher viscoelasticity as expressed by its vitality. Depending on the actual application, e.g. for bakery purposes, and/or animal feed such as fish feed, various gluten/starch ratios may be desired. However, the subject process preferably permits to prepare a gluten-enriched fraction wherein the gluten content is at least 75%, more preferably 80%, of dry matter.

The separation step will separate starch from gluten components, as exemplified by the increase in nitrogen content in the gluten-enriched fraction, versus the reduction of the nitrogen content in the starch fraction.

The gluten enriched fraction comprises visually conceivable gluten aggregates, typically in the form of strands of a network, optionally upon staining to see the difference. However, the aggregates from a network, however are not separated from the starch enriched fraction(s) so as to form larger clusters.

In an alternative embodiment, the present invention also relates to a process for the continuous or semi-continuous separation of gluten and starch from wheat flour, comprising the steps of: (a) contacting wheat flour with a diluent to obtain a first dough; (b) subjecting the first dough under a first pressure to a deformation comprising simple shear flow, rotational flow and elongational flow, to obtain a second dough comprising starch and aggregated gluten strands; and (d) subjecting the second dough to a separation process to separate the second dough into one or more separated gluten enriched fractions and one or more separated off starch enriched fractions. Step (d) may be performed by any suitable method, including but not limited to centrifugation, filtration, and/or washing steps, as set out herein below. In a particularly preferred embodiment, the separation of gluten aggregates from the starch matrix may be performed in an apparatus comprising two parallel surfaces moving in the same direction with different speeds. Between the surfaces there is preferably an adjustable gap. The sheared material of step (b), or (c) is preferably fed between the two surfaces. With the speed difference and a directional angle between the surfaces the gluten- enriched agglomerates are then moved out of the starch-enriched fraction. Pressure on at least one of the surfaces is required to maintain suitable friction on the gluten agglomerates. In a particularly preferred embodiment, the apparatus comprises a double flat belt as set out below.

This process has the benefit of allowing for a fast first partial separation of starch and gluten strands, which may allow to separate the starch and the gluten better than in the original wheat flour, leading likely to gluten enriched fraction of a higher vitality, and reducing e.g. the amount of water required in the case of a water wash separation. This higher vitality may be illustrated by the exceptionally high DVS monolayer water sorption capacity, as well as the high amount of disulfide bridges that could be measured as compared to gluten enriched materials derived from commercially applied conventional washing processes.

However, the process according to the invention comprising step (c) leads to a stronger higher separation, and aggregated of the gluten in the wheat flour that the process comprising only steps (a) and (b), without the need for a dilution of the fractions at an earlier stage.

Particle sizes of the gluten enriched fractions may be advantageously determined according to an optical method, e.g. staining the gluten and/or starch component, and applying measurements versus standards to determine the size of the gluten particles.

### Short Description of the Figures

Figures 1 to 4 are SEM microscopic images of gluten strands obtained in the process according to the invention. Fig. 1 and 2 show a 200 times enlarged surface, Fig. 3 and 4 an 800 times enlarged image.
Figure 5 shows a graph of the DVS water absorption of examples 4 and 5 , and comparative examples 9 to 12.

Step (a) comprises preparation of dough. Different dough preparations can be performed on one and the same day or within certain amount of time,. However, the maximal water addition level preferably is confirmed prior to, or during the process to allow for a continuous dosing of water.

Accordingly, the subject process may also comprise the steps of milling wheat grain, and optionally separating the obtained wheat flour, and optionally determining the maximal water addition level prior to the dough preparation.

Hence, in a preferred embodiment the invention provides a process comprising i) milling of wheat grains to obtain flour, and optionally separating the obtained flour into fractions, and optionally, ii) determining the maximal water addition level based on the starting flour.

It is preferred that the flour has a moisture content of less than 20 weight % (wt.%), based on the total weight of the flour. It is further preferred that the flour has an ash content of less than 1 wt.%, based on the total weight of the flour.

The moisture content of the dough as obtained in step (a) is at or less than 50%, preferably at or less than 45%, based on dry weight of the flour, however including the humidity of the flour. It has thus been found that the water content of the dough can be maintained at relatively low levels. In step (a), the first dough can for example be a zero-developed dough (ZD- dough). The ZD-dough can be prepared by the method according to D. T. Campos et al., Cereal Chemistry 73, 105 - 107 (1996) with modifications as disclosed in S. H. Peighambardoust et al., Cereal Chemistry 81, 714 - 721 (2004). In this method, a powdered ice mixture that was being sieved to an average particle size of about 700 µm is blended with the flour at low temperature, preferably at a temperature of about -25°C, with the desired weight ratios in a Waring blender and the flour is uniformly distributed at a reduced speed. Mixing of these ingredients in step (a) is typically performed at low SME-values, preferably below 10 kJ/kg and more preferably below 2.5 kJ/kg, since it is preferable that the amount of energy transferred to the gluten is as low as possible. Consequently, a ZD-dough according to this document is defined as a dough made by mixing at least flour and water in a weight ratio of 1 : 9 to 9 : 1, based on the total weight of the dough, with an mechanical energy input in terms of SME of lower than 5 kJ/kg, preferably lower than 2.5 kJ/kg. A further method for preparing the first dough may be the RAPIDOJET procedure wherein a high pressure water jet is used that catches falling flour particles in the air (cf. www.rapidojet.de; Dr. B. Noll, "Presentation of the RAPIDOJET-procedure: Fast, energy saving and dust free dough preparation by using a high pressure water jet"; cf. also US 2004/0022917). According to a preferred embodiment of the process according to the invention, the first dough may be , i.e. maintained at rest at a temperature between 0°C and 50°C, preferably between 15°C and 50°C, more preferably for a time period of less than 1 to 15 minutes prior to step (b). More preferably, the annealing step is conducted for1 - 5 minutes at 15°C to 25°C. In this annealing step, a hydrated homogenous dough is formed. As will be apparent to the person skilled in the art, this retention time typically depends on the dough water temperature and the wheat flour quality. This hydration step can be performed in a holding tank or in a mixing device under low shear conditions.. The term "specific mechanical energy" (SME) is well known in the art, and is calculated on the basis of a cone and plane device as elucidated in Cereal Chem. 81, 714 - 721 (2004).

In step (b), the first dough is subjected to a deformation comprising simple shear flow, rotational flow and elongational flow. In kneading processes, i.e. processes involving kneading and/or pumping steps, three kinds of deformations occur: (1) uniaxial extension, (2) simple shear and (3) solid body rotation. T.R.G. Jongen et al. Cereal Chem. 80, 383 - 389 (2003) defined the flow parameter D which can be used to distinguish between rotational, simple shear and elongational flow, that is D = -1 for pure rotational flow, D = 0 for pure simple shear flow and D = +1 for pure elongational flow. In step (b) of the process of the present invention, all three deformations may occur. Thus the first dough is ideally subjected to a shear flow that comprises all three components, whereby the share of each of the components is determined a) by the equipment available, and b) according to the desired dough composition. The directional deformation components other than the simple shear flow may be advantageously provided by the feed mechanisms in the apparatus employed for the present process, e.g. by the deformation obtained by extruding or pumping a dough. Preferably, the simple shear flow remains the dominant deformation component.

Without wishing to be bound to any particular theory, it is assumed that the shear under comparatively high pressure is required to remove the gluten proteins from the starch particles.

In step (b), the absolute pressure applied to the dough is preferably in the range of larger than 10 kPa (0.1 bar) to 5000 kPa (50 bar).

Good results were obtained applying a pressure in the range of from 500 to 2500 kPa. The actual pressure is not critical, as long as the pressure, processing time and related shear stress do not lead to an increase in dough temperature above 55°C, which may reduce the formation of the gluten particles, and may lead to deterioration of the starch composition.

The pressure was found to be dependent on dough viscosity, which depends on dry substance, the temperature of the dough and system energy input, flour type as well as diluent content and composition, and equipment design, e.g. the distance between deformation actuators and shear distance.

Temperature is preferably between 0 to 50°C, more preferably in the range of 5 to 15°C. More preferably, the temperature is maintained below the temperature in step (b).

The SME in step (b) preferably is at least 5 kJ/kg, more preferably at least 20 kJ/kg. The SME in step (b) preferably is at most 150 kJ/kg , preferably at most 120kJ/kg.

The microstructure of the second dough comprises gluten protein enriched aggregates spread around starch granules, showing a meat-like fibres upon coloration of the gluten fraction.

The shear flow in step (c) is exerted at a second pressure different from the first pressure applied in step (b), to obtain a composition comprising one or more an further aggregated gluten enriched fractions and one or more starch enriched fractions.

Preferably, the second pressure is lower than the first pressure. Preferably, the pressure applied in step (c) is below 5 kPa, yet more preferably below 3 kPa. Preferably, the energy input in step (c) is below the specific energy input in step (b).

In step (c), the second dough comprising larger gluten aggregates and/or agglomerates is preferably subjected to essentially only one kind of deformation, namely one comprising simple shear. In this step, the second dough obtained in step (b) is preferably subjected to an essential simple shear flow with a shear stress of at least 1 kPa and a specific mechanical energy input of at least 5 kJ/kg per minute processing time.

The shear in step (c) is preferably exerted by deformation actuators, such as the walls of rotating cylinders. The average distance between the deformation actuators exerting the shear in step (c) is preferably in the range of from 0.1 mm to 20 mm.

In order to enhance the formation of a stratified gluten network, the distance between the actuators exerting the shear in step (c) is preferably chosen such that the actuators are spaced in a distance similar or larger to the smaller diameter of the gluten agglomerates dimensions obtainable in step (c). These dimensions may be conveniently measured by staining of the dough with appropriate dye, and subsequent measurement, which should be well within the skills of a skilled person. Preferably, thus, the average distance between the deformation actuators exerting the shear in step (c) is in the range of from 0.1mm to 20 mm, more preferably 0.2 mm to 10mm, and most preferably of from 1 mm to 8 mm.

A suitable line up for the subject process may include a single extruder or subsequent extruders, including single or multiple screw extruders. More preferably at least step (c) is performed in a shearing device comprising comprising an outer cylinder and an inner cylinder rotating relative to each other coaxially. The outer and inner cylinders define an annulus in the volume between the exterior surface of the inner cylinder and the interior surface of the outer cylinder. The term "cylinder" herein encompasses cylindrical, conical, (frustro)conical shapes. Such a device may be device comprising two coaxial cylinders rotating relative to each other concentrically or excentrically to achieve a Couette type flow.When employed in the process of this invention, the dough is contained in the annulus. According to this second preferred embodiment of the invention, step (c) is preferably conducted in a device comprising two coaxial cylinders rotating relative to each other concentrically or eccentrically due to the fact that such a device may allow to apply shear flow due to the comparatively large contact surface, and with a dimension between the two surfaces that may conveniently be chosen in the dimension of the gluten aggregates. Additional positive effect on the further gluten agglomeration is the difference of the adhesion forces of starch and aggregated gluten to the two surfaces. The surfaces of the device conveniently may act as deformation actuators.

Preferably, the process in steps (a) to (c) or (a) to (d), respectively, is performed in a continuous or semi-continuous mode of operation.

A benefit of the present process with respect of the process disclosed in EP-A-1881996 is that the preparation of the processed dough in two separate steps permits the use of equipment that is not only exerting simple shear flow, but may also transport the dough during the first shearing step.

As a result, the equipment that is used to perform step (b) may be specifically suitable for continuous process, e.g. active mixtures such as extruders, or static mixers, while step (c) may be added at the end of step (b). Both steps (b) and (c) are preferably linked to each other, and may be exerted in the same equipment, e.g. by changing the flow and/or shear conditions accordingly.

Step (c) is conducted with an "essential simple shear flow" which is here defined as deformation conditions wherein the elongation rate ε is less than 10 s-1.

The present process further preferably comprises step (d), preferably after step (c), or directly after step (b), of separating the composition into the aggregated gluten enriched fraction and the starch enriched fraction, and preferably further purifying the gluten enriched fraction. This may advantageously be achieved by centrifugation, screening, dispersion, washing, freeze drying, spray drying and/or combinations thereof.

Preferably, any one of steps (a) to (c) is executed at least in part in a device having actuators, such as walls, exerting the shear onto the dough and/or composition. Suitable devices include an extruder, a device comprising two coaxial cylinders rotating relative to each other concentrically or excentrically and having walls exerting shear, and/or a static mixer, or combinations thereof, and/or parallel plate like shear devices.

In step (d) the composition is preferably subjected to a separation process, to separate the processed dough into a gluten enriched fraction and a starch enriched fraction. This may be performed by any suitable method, including but not limited to centrifugation, filtration, and/or washing steps.

Step (b) may advantageously be performed using an enzyme on the gluten fraction, such as for instance the process disclosed in Weegels, P. L., Marseille, J. P., and Hamer, R. J., 1992, Starch/Staerke 44,2, pp. 44-48 and Christophersen, C.,Andersen, E., Jakobsen, T. S., and Wagner, P., Starch/Starke, 1997,49, pp. 5-12, who describe the use of enzymes as a processing aid in the separation of wheat flour into starch and gluten. The enzymes mentioned are lipase, hemicellulase, cellulose and xylanase.

However, the composition produced in step (c) may also find other applications, e.g. as a meat replacement.

Step (d) may preferably comprise the steps of washing, screening and/or centrifugation. The thus obtained gluten enriched fraction may further advantageously be purified and/or dried, to obtain a gluten composition. Furthermore, the gluten enriched fractions obtained in (c) or (d) may be subjected to a further purification step (e) to remove residual starch.

A particularly preferred process for step involves the use of an apparatus comprising two flat parallel belts, which are preferably positioned at an angle toward each other. The belts carry out a forward movement, whereby the upper belt moves at a faster pace than the lower belt.

The composition obtained in step (b) or (c) is entered between the belts, which are advantageously spaced such that the gluten aggregates retain grip between the belts, and thus experience two different speed levels. Since the upper belt is moving at an angle with respect to the lower belt, the gluten aggregates are forced to this side.

Contrarily, the starch fraction receives no, or very little shear from both belts, and thus will transported forward with the lower band and in the general direction of the lower band, and is thus separated from the separated gluten fraction. This embodiment of process step (d) preferably also operated at a temperature of from 5 to 15 °C.

Process step (d) described above may advantageously also be combined with step (c) into a single stage, since there is a pressure drop due to the formation and separation of the gluten aggregates from the starch formed herein.

The present disclosure further also relates to a composition comprising an aggregated gluten enriched fraction and a starch enriched fraction, as obtainable by steps (b) (c), (d) and/or (e). The composition obtainable in step (b) comprises a three dimensional network of gluten strands of at least 0.02 mm diameter, which are embedded in a starch fraction.

The composition obtainable in step (c) further comprises gluten agglomerates having 5 to 20 mm average diameter. The diameter of the gluten strands and/or particles may be conveniently measured using colorants that allow a visual and/or microscopic assessment of the diameter.

The present disclosure also pertains to a gluten-enriched fraction obtainable by the process, having a protein content of from 30 to 70%wt. on dry mass as determined by nitrogen content, applying a factor of 5.7 for the calculation of Nitrogen content to amino acid content. Such a fraction may conveniently be employed e.g. as animal food, e.g. as fish feed. The present disclosure also pertains to a starch enriched fraction obtainable by the process, comprising less than 5% wt., preferably less than 2-3% wt/% on dry mass, of protein.

The present disclosure also pertains to a further gluten-enriched fraction obtainable by the process having a protein content of 30 to 85 %wt. on dry mass.

The present disclosure also pertains to a further gluten-enriched fraction comprising a total amount of disulfide bridges in the range of from 55 to 80 nM/mg protein, preferably in the range of from 60 to 75 nM/mg protein, yet more preferably of from 62 to 70 nM/mg protein, as determined according to the method set out in Anderson and Ng, Cereal chemistry, 2000, V.7, 354-359; and Chan and Wasserman, Cereal Chemistry, 1993, V.70, 22-26.

The present disclosure also pertains to a further gluten-enriched fraction having a DVS monolayer water absorption (GAB) of above 6.3%, preferably in the range of from 6.35 to 8%, more preferably of from 6.5 to 7.9%, yet more preferably of from 6.7 to 7.5%, as determined by dynamic vapour sorption (DVS), and applying the GAB model to the obtained sorption isotherm to calculate the monolayer capacity, as described in A.H. Al-Muhtaseb et al., Journal of Food Engineering 61 (2004). The monolayer capacity is expressed as %-moisture required to form a monolayer of water on the sample surface.

The disclosure also pertains to a process for the manufacture of animal of human food products, preferably bakery products comprising the process as described herein above, and to the use of the compositions and fractions as described herein above for the preparation of various food and other products. The present process permits to prepare a gluten enriched fraction comprising a larger proportion of vital wheat gluten according to CODEX STAN 163-1987, Rev. 1 - 2001, than previously disclosed methods have permitted, due to the shorter contact with water under conditions that devitalize the gluten.

The present disclosure also relates to an apparatus comprising means for subjecting the first dough under a first pressure to a deformation comprising simple shear flow, rotational flow and elongational flow, to obtain a second dough comprising starch and first aggregated gluten fraction, (i.e. first means); and means for subjecting the second dough to a deformation comprising a shear flow at a second pressure different from the first pressure, to obtain a composition comprising one or more aggregated gluten enriched fractions and one or more starch enriched fractions (i.e. second means).

Preferably, the first means comprises an extruder. Also preferably, the second means comprises a concentric cylinder type comprising an outer cylinder and an inner cylinder comprising actuators exerting shear, and/or a static mixer, or combinations thereof.

The second means may also comprise an apparatus comprising two essentially parallel surfaces moving in the same direction with different speeds, e.g. belts or large rolls, however preferably at different angles. Between the surfaces there is preferably an adjustable gap. The sheared material of step (b), or (c) is preferably fed between the two surfaces. With the speed difference and a directional angle between the surfaces the gluten- enriched agglomerates are then moved out of the starch-enriched fraction. Pressure on at least one of the surfaces is required to maintain sutiable friction on the gluten agglomerates.

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

The following examples illustrate the invention:

### Example 1: Preparation of a First Dough

Separation experiments are performed with wheat flour from a single wheat cultivar. The flour used has a protein content of 11.2% (wt./wt.) and a moisture content of 14.0%(wt./wt.).

Wheat flour and an aqueous solution of NaCl at 4% (wt/wt) are fed into a twin screw extruder in a ratio of wheat to aqueous solution of 2.0 (wt./wt.). In the extruder, a first dough having a moisture content of 43% (57 % on dry substance) is prepared. The extruder is maintained at a temperature of 15°C.

### Example 2: Preparation of gluten aggregates

The extruder outlet is linked to a rotational shear reactor comprising a rotating steel cylinder in fixed cylindrical housing.

The rotating steel cylinder is positioned concentrically/centred in the outer cylindrical housing. The cylindrical housing has an inlet for the first dough at the side proximal to the extruder, and an outlet for the resulting composition at the distal end. The rotating cylinder is driven by an electrical motor.

The rotating cylinder is rotated inside the sleeve cylinder at a rotational speed of 20 rounds per minute (RPM). The extruder outlet is connected fluidly to the inlet of the shear reactor, whereby the inlet is connected to the gap between the rotating cylinder and the cylindrical housing. The extruder outlet is connected to the inlet such as to deliver the first dough under pressure to the inlet of the shear reactor.

The gap between the inner wall of the housing facing the cylinder, and the outer surface of the rotating cylinder of the shear reactor is 5 mm, but at a distance of ca. 15 cm, a larger gap between the housing and the rotating cylinder with a larger distance is provided, thus reducing pressure and reducing intermittently shear on the composition.

The second dough, containing 2 wt.% NaCl on flour basis is transported with a flow rate of 30 kg/h through the shear machine.

The product after the shear machine contains large gluten aggregates in a visibly developed gluten network. The protein content in these aggregates was found to vary between 30 to 70 wt.% protein on dry mass.

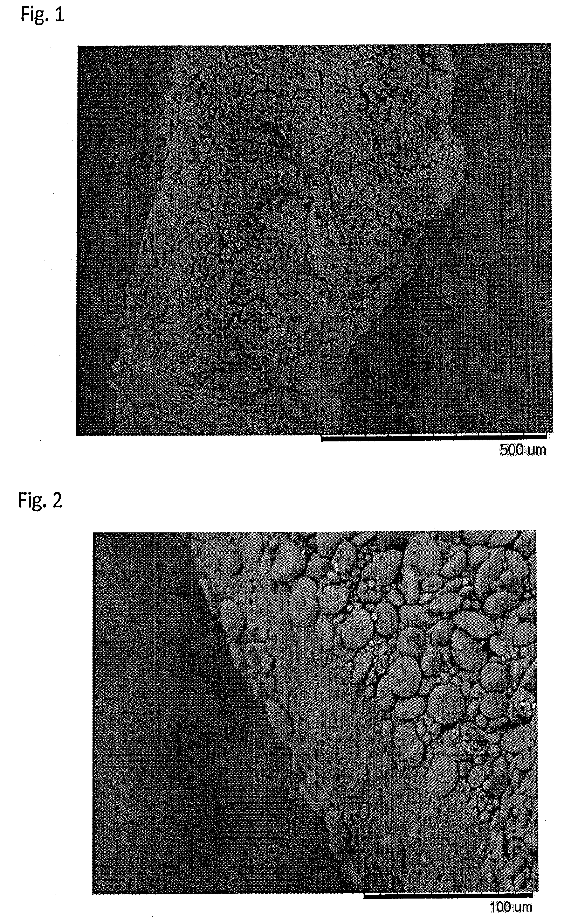

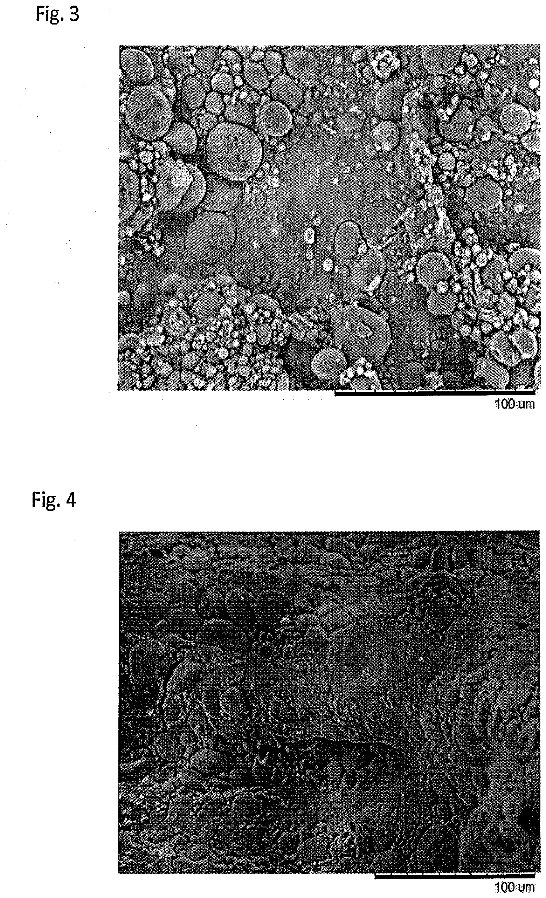

Figures 1 to 4 are SEM microscopic images of gluten strands that were formed in Example 2. These clearly show that the gluten enriched fraction is largely composed of gluten proteins that are covered with starch particles.

### Example 3: Determination of Disulfide and Sulfhydryl groups.

Gluten-enriched aggregates obtained from step (c) were freeze dried, and milled in a water cooled IKA mill type M20. The obtained milled particles were then screened to 200 µm using an appropriate sieve.

The obtained samples were subjected to an analysis for their content of sulfhydryl groups and sulphur-sulphur double bonds, using the method described in Anderson and Ng, Cereal chemistry, 2000, V.7, 354-359; Chan and Wasserman, Cereal Chemistry, 1993, V.70, 22-26.

Samples were dissolved in 8M urea; then maintained at 20°C and 50°C for 16 hours. Then free SH groups and S-S group concentration was determined after treatment for 15 min with 0.2 mL 0.01 MDTNB in Tris buffer pH 8.2, and 4.5mL 0.2MTris buffer, pH 8.2, for a sample of 0.5 ml, and 0.2mL 0.01 MDTNB in Tris buffer pH 8.2 and 4.5mL 0.2MTris buffer, pH 8.2, containing borate, respectively, and, filtration of the samples and absorbance measurements at 412 nm. The amount of SH groups was then calculated based on a calibration curve using Cysteine as a standard.

The samples were compared with commercially available gluten samples derived conventional washing processes and with similar particle size and particle distribution (Comparative Examples 1 to 8). Table 1 illustrates the difference between the measured values:

**Table 1:**

| | Protein content | Free SH Sulfhydryl | | Disulfide bridges (expressed as free SH) | | Total Cystein content | | % S-S |
|---|---|---|---|---|---|---|---|---|
| | % | | stdv | | stdv | | stdv | |
| Ex.1 | 43.6 | 8.78 | 0.25 | 63.5 | 0.63 | 72.2 | 0.88 | 88 |
| Comp. Ex. 1 | 60.8 | 8.76 | 0.21 | 53.3 | 0.25 | 62.1 | 0.46 | 86 |
| Comp. Ex. 2 | 77.1 | 7.88 | 0.12 | 52.3 | 0.41 | 60.2 | 0.53 | 87 |
| Comp. Ex. 3 | 77.3 | 6.39 | 0.15 | 48.6 | 0.75 | 55.0 | 0.90 | 88 |
| Comp. Ex. 4 | 74.4 | 7.15 | 0.23 | 48.4 | 0.52 | 55.6 | 0.75 | 87 |
| Comp. Ex. 5 | 77.1 | 7.17 | 0.18 | 46.1 | 0.35 | 53.3 | 0.53 | 87 |
| Comp. Ex. 6 | 79.4 | 9.06 | 0.25 | 52.7 | 0.61 | 61.7 | 0.86 | 85 |
| Comp. Ex. 7 | 79.2 | 7.11 | 0.16 | 49.3 | 0.57 | 56.4 | 0.73 | 87 |
| Comp. Ex. 8 | 42.7 | 9.93 | 0.28 | 51.1 | 0.38 | 61.0 | 0.66 | 84 |

Example 1 which was prepared according to the present process has a significantly higher amount of disulfide bridges, indicating the higher intactness of the gluten protein as compared to the comparative examples, all of which had originated in conventional washing processes. Further samples according to the invention gave similar values.

### Examples 4 and 5: Determination of Water Vapour Sorption

Gluten-enriched aggregates particles as prepared in Example 3 were analysed for DVS water absorption, applying the kinetic three parameter model (GAB).

The samples were compared with commercially available gluten samples derived conventional washing processes and with similar particle size and particle distribution (comparative examples 9 to 12).

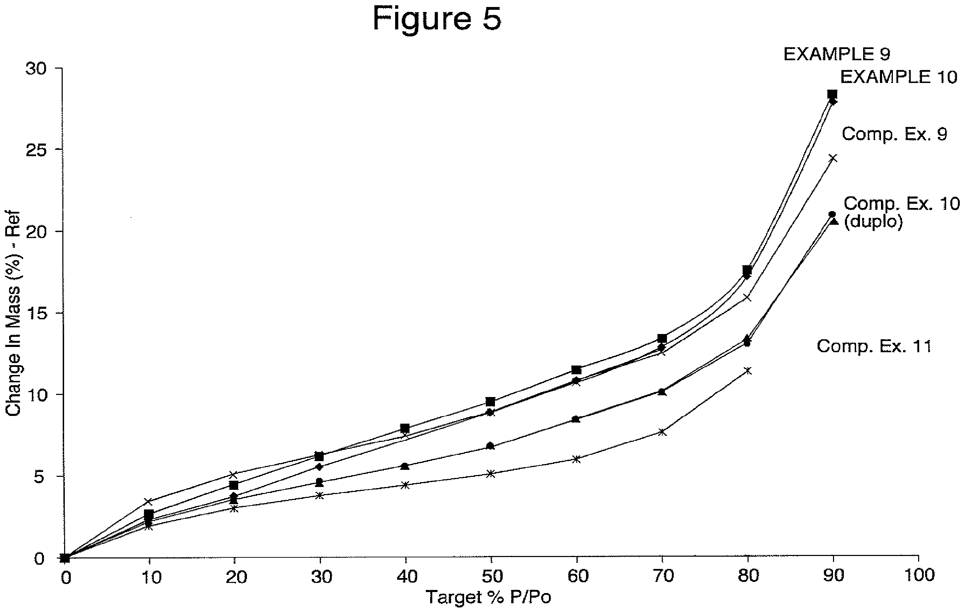

A water vapour sorption curve was obtained for each of the samples using a dynamic vapour sorption (DVS) apparatus using a Surface Measurement Systems DVS-advantage system. The results give the dry-bases moisture content of gluten as a function of the water activity. The temperature of the DVS-advantage measurements was 25°C. In the DVS the mass increase from water adsorption is monitored at constant temperature 25°C. When the measured mass increase was less then < 0.001%/min, it was assumed that an equilibrium was reached, and the water activity was increased by 10% until the next equilibrium. The sorption was increased subsequently in 10% steps up to 90%. The measured sorption curves are plotted as Figure 5.

The monolayer capacity is expressed as %-moisture required to form a monolayer water on the surface, and determined from the sorption curves by applying the three parameter GAB-model for monolayer capacity, as described in A.H. Al-Muhtaseb et al., Journal of Food Engineering 61 (2004). Table 2 shows the resulting data:

**Table 2: Monolayer Water Absorption (DVS)**

| Example | Protein content [%] | Monolayer capacity (GAB model) |
|---|---|---|
| Example 4 | 47.7 | 6.89% |
| Example 5 | 49.6 | 7.49% |
| Comp. Ex. 9 | 77.1 | 4.70% |
| Comp. Ex. 10 | 77.3 | 3.20% |
| Comp. Ex. 11 | 74.4 | 5.13% |

The examples show that gluten enriched materials as obtainable by the present process have a significantly higher monolayer water sorption activity, as compared to conventionally produced gluten enriched materials. The gluten component appears to have a positive contribution to the sorption, which is not the case for conventionally prepared gluten enriched materials.

## Claims

1. A process for the continuous or semi-continuous enrichment of gluten and starch fractions in wheat flour, comprising the steps of:
(a) contacting wheat flour with a diluent to obtain a first dough;
(b) subjecting the first dough under a first pressure to a deformation comprising simple shear flow, rotational flow and elongational flow, to obtain a second dough comprising one or more first aggregated gluten fractions; and
(c) optionally subjecting the second dough to a deformation comprising a shear flow at a second pressure different from the first pressure,
to obtain a composition comprising one or more further aggregated gluten fractions and one or more further starch enriched fractions
wherein the moisture content of the dough obtained in step (a) is at or less than 50%, based on the dry weight of the flour, including the humidity of the flour.

2. A process according to claim 1, wherein the second pressure is lower than the first pressure.

3. A process according to claim 1 or claim 2, further comprising step (d) separating the second dough into one or more further aggregated gluten enriched fractions and one or more further starch enriched fractions.

4. A process according to any of claims 1 to 3, wherein the shear in step (c) and/or (d) is exerted by deformation actuators, and wherein the average distance between the deformation actuators exerting the shear in step (c) is in the range of from 0.1 mm to 20 mm.

5. A process according to any one of the previous claims, wherein step (b) is executed with a shear stress of at least 1 kPa and a specific mechanical energy input of at least 10 kJ/kg.

6. A process according to any of claims 3 to 5, wherein step (d) may comprise centrifugation, screening, milling, drying, washing out, dispersion, electrostatic separation, shear between two actuators moving concurrently but at a different speed, static mixing and/or combinations thereof.

7. A process according to any of the previous claims, wherein any one of steps (b), (c) and/or (d) is executed at least in part in an extruder, a concentric cylinder type comprising an outer cylinder and an inner cylinder having actuators exerting shear, an apparatus comprising two belts acting as actuators, and moving in the same direction at different speed and at an angle to each other, and/or a static mixer, or combinations thereof.

## Patentansprüche

1. Verfahren für die kontinuierliche oder semi-kontinuierliche Anreicherung von Gluten- und Stärkefraktionen in Weizenmehl, umfassend die Schritte:
(a) Kontaktieren von Weizenmehl mit einem Verdünnungsmittel, um einen ersten Teig zu erhalten;
(b) Unterziehen des ersten Teigs unter einem ersten Druck einer Verformung, die eine einfache Scherströmung, Drehströmung und Längsströmung umfasst, um einen zweiten Teig zu erhalten, der eine oder mehrere erste aggregierte Glutenfraktionen umfasst; und
(c) optional Unterziehen des zweiten Teigs einer Verformung, die eine Scherströmung bei einem zweiten Druck umfasst, der sich vom ersten Druck unterscheidet, um eine Zusammensetzung zu erhalten, die eine oder mehrere weitere aggregierte Glutenfraktionen und eine oder mehrere weitere stärkeangereicherte Fraktionen umfasst,
wobei der Feuchtigkeitsgehalt des in Schritt (a) erhaltenen Teigs bei oder kleiner als 50 % ist, bezogen auf das Trockengewicht des Mehls, enthaltend die Feuchtigkeit des Mehls.

2. Verfahren nach Anspruch 1, wobei der zweite Druck geringer ist als der erste Druck.

3. Verfahren nach Anspruch 1 oder Anspruch 2, weiter umfassend Schritt (d) zum Trennen des zweiten Teigs in eine oder mehrere weitere aggregierte glutenangereicherte Fraktionen und eine oder mehrere weitere stärkeangereicherte Fraktionen.

4. Verfahren nach einem der Ansprüche 1 bis 3, wobei das Scheren in Schritt (c) und/oder (d) durch Verformungsaktoren ausgeübt wird und wobei die durchschnittliche Distanz zwischen den Verformungsaktoren, die das Scheren in Schritt (c) ausüben, im Bereich von 0,1 mm bis 20 mm liegt.

5. Verfahren nach einem der vorstehenden Ansprüche, wobei Schritt (b) mit einer Scherbelastung von mindestens 1 kPa und einem spezifischen mechanischen Energieeingang von mindestens 10 kJ/kg ausgeführt wird.

6. Verfahren nach einem der Ansprüche 3 bis 5, wobei Schritt (d) Zentrifugation, Sieben, Mahlen, Trocknen, Auswaschen, Dispergieren, elektrostatische Trennung, Scheren zwischen zwei Aktoren, die sich gleichzeitig, aber bei unterschiedlicher Geschwindigkeit bewegen, statisches Mischen und/oder Kombinationen davon umfassen kann.

7. Verfahren nach einem der vorstehenden Ansprüche, wobei einer von Schritten (b), (c) und/oder (d) mindestens teilweise in einem Extruder, einer konzentrischen Art von Zylinder, die einen Außenzylinder und einen Innenzylinder umfasst, mit Aktoren, die eine Scherwirkung ausüben, einer Vorrichtung, die zwei Bänder umfasst, die als Aktoren dienen und sich in dieselbe Richtung bei unterschiedlicher Geschwindigkeit und bei einem Winkel zueinander bewegen, und/oder einem statischen Mixer oder Kombinationen davon ausgeführt wird.

## Revendications

1. Procédé d'enrichissement continu ou semi-continu de fractions de gluten et d'amidon dans une farine de blé, comprenant les étapes consistant à :
(a) mettre en contact de la farine de blé avec un diluant pour obtenir une première pâte;
(b) soumettre la première pâte sous une première pression à une déformation comprenant un simple flux de cisaillement, un flux rotatif et un flux d'étirement, pour obtenir une seconde pâte comprenant une ou plusieurs premières fractions de gluten agrégées ; et
(c) facultativement, soumettre la seconde pâte à une déformation comprenant un flux de cisaillement à une seconde pression différente de la première pression, pour obtenir une composition comprenant une ou plusieurs autres fractions de gluten agrégées et une ou plusieurs autres fractions enrichies en amidon
dans lequel la teneur en humidité de la pâte obtenue à l'étape (a) est égale ou inférieure à 50 %, sur la base du poids sec de la farine, incluant l'humidité de la farine.

2. Procédé selon la revendication 1, dans lequel la seconde pression est inférieure à la première pression.

3. Procédé selon la revendication 1 ou la revendication 2, comprenant en outre l'étape (d) de séparation de la seconde pâte en une ou plusieurs autres fractions enrichies en gluten agrégées et en une ou plusieurs autres fractions enrichies en amidon.

4. Procédé selon l'une quelconque des revendications 1 à 3, dans lequel le cisaillement à l'étape (c) et/ou (d) est exercé par des actionneurs de déformation, et dans lequel la distance moyenne entre les actionneurs de déformation exerçant le cisaillement à l'étape (c) se situe dans la plage de 0,1 mm à 20 mm

5. Procédé selon l'une quelconque des revendications précédentes, dans lequel l'étape (b) est exécutée avec une contrainte de cisaillement d'au moins 1 kPa et un apport d'énergie mécanique spécifique d'au moins 10 kJ/kg.

6. Procédé selon l'une quelconque des revendications 3 à 5, dans lequel l'étape (d) peut comprendre une centrifugation, un tamisage, un broyage, un séchage, un lavage, une dispersion, une séparation électrostatique, un cisaillement entre deux actionneurs se déplaçant simultanément mais à une vitesse différente, un mélange statique et/ou des combinaisons de ceux-ci.

7. Procédé selon l'une quelconque des revendications précédentes, dans lequel l'une quelconque des étapes (b), (c) et/ou (d) est exécutée au moins en partie dans une extrudeuse, un type de cylindre concentrique comprenant un cylindre extérieur et cylindre intérieur ayant des actionneurs exerçant un cisaillement, un appareil comprenant deux courroies agissant en tant qu'actionneurs, et se déplaçant dans la même direction à une vitesse différente et selon un angle l'une par rapport à l'autre, et/ou un mélangeur statique, ou des combinaisons de ceux-ci.
